# EUROPEAN PATENT SPECIFICATION

(11) **EP 4 059 752 B1**
(45) Date of publication and mention of the grant of the patent: **18.10.2023**
(21) Application number: 21163256.7
(22) Date of filing: 17.03.2021
(51) Int. Cl.: B60J 5/06

(54) **INTERLOCKING PANEL APPARATUS FOR FORMING A VEHICLE CARGO CONTAINER SIDE**
VERRIEGELUNGSPLATTENVORRICHTUNG ZUR HERSTELLUNG EINER FAHRZEUGFRACHTCONTAINERSEITE
APPAREIL DE PANNEAU D'EMBOÎTEMENT POUR FORMER UN CÔTÉ DE CONTENEUR DE CARGAISON DE VÉHICULE

(43) Date of publication of application: 21.09.2022
(73) Proprietor: DD Riggs Ltd, Gainsborough DN21 1WH (GB)
(72) Inventor: FORD, Peter Michael, Gainsborough, DN21 1WH (GB)
(74) Representative: Swindell & Pearson Limited

(56) References cited:
- EP-A1- 0 159 206
- EP-A1- 3 085 561
- EP-A2- 1 772 299

## Description

### FIELD OF THE INVENTION

Embodiments of the present invention relate to an interlocking panel apparatus for forming a vehicle cargo container side.

### BACKGROUND TO THE INVENTION

Known vehicle cargo containers include trailers or cargo boxes.

A trailer is an unpowered vehicle configured to be towed by a powered vehicle. Examples include semi-trailers and full trailers. A combination of the trailer and a tractor unit is referred to as an articulated vehicle (HGV/`lorry'). A cargo box is a large cargo container of a box truck, typically supported on a chassis cab.

Two common types of trailer exist: curtain sided trailers and box body trailers.

Curtain sided trailers comprise a deck onto which a load can be placed, and drawable curtains at left/right sides. The curtains can be drawn open to enable easy side access for loading/unloading by a forklift. When the curtains are closed and tensioned, they provide an aerodynamic benefit, as well as a low level of security.

A problem with curtain sided trailers is that the canvas curtains can be slashed open easily, enabling intruders to gain access to a load space. Another problem is that opening and closing the curtains is strenuous and can be hazardous in high winds, due to tensioning straps and anchoring poles attached to the curtains which can billow in gusts of wind.

Box trailers, by contrast, comprise rigid side panels, typically made of steel or aluminium. Box trailers therefore provide a higher level of security and can be adapted to seal a climate-controlled load space. However, side loading/unloading is not possible.

For at least half a century, the haulage industry has selected either box trailers or curtain sided trailers based on their attributes.

EP 1772299 B1 describes a truck (10) having a covered rear body (12) with an opening side (30) for loading/unloading. The opening side is made up of a combination of sliding (50) and hinged (52) panels. The sliding panels move in guide rails (42, 44) along the bottom and top of the opening side. Each sliding panel has a hinged panel on each side. The hinged panels open outwards. Once the hinged panels are open the sliding panels can be moved along to one or both ends of the body opening, freeing a space for loading/unloading. When the hinged panels are closed and fastened, they present a smooth and continuous surface on the inside of the vehicle body.

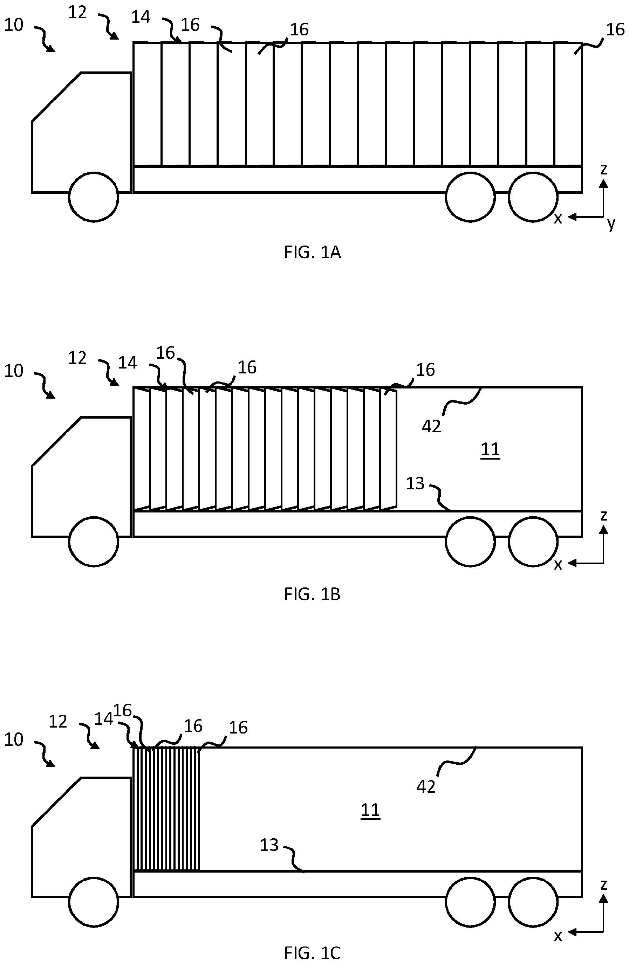

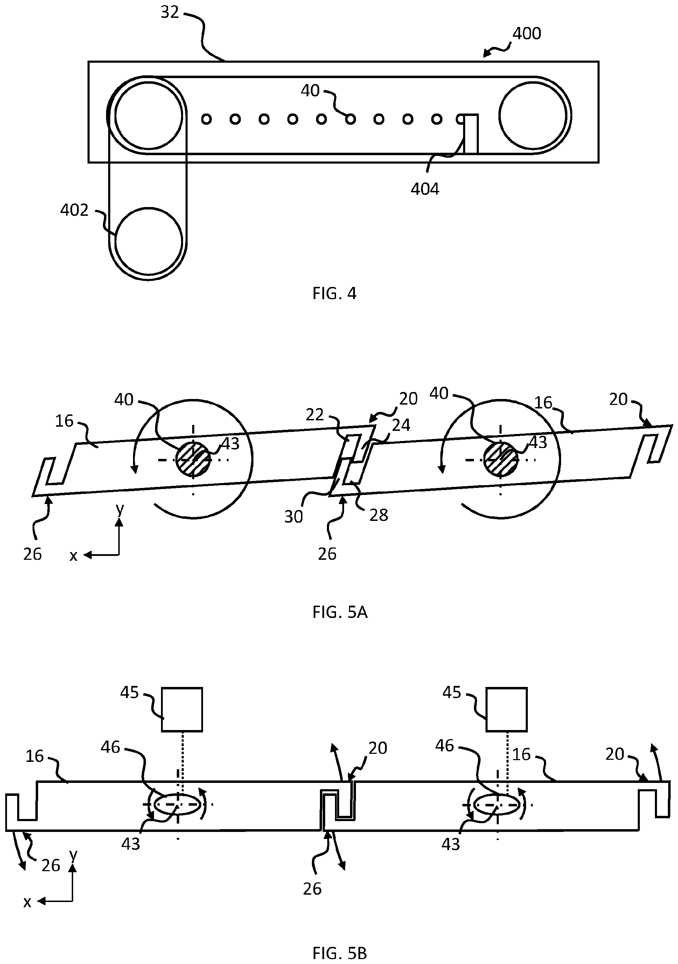

EP 3085561 A1 describes a side panel construction for a curtain sided transport vehicle. In the embodiment shown in Figs. 1a-1b and 5, a plurality of panels 10 rotate in a same direction as each other. However, the panels do not interlock with each other. In the embodiment shown in Figs. 4a-4b, the panels 10 open in the manner of 'saloon doors' and therefore may be releasably securable to each other in the middle such that, when released, the two parts/panels can both pivot with respect to each other.

### BRIEF DESCRIPTION OF VARIOUS EMBODIMENTS OF THE INVENTION

According to the invention, there is provided an apparatus configured to form a side of a vehicle cargo container, such as a trailer, the apparatus comprising:
a plurality of panels configured to interlock with one another to define, at least in part, a side of the vehicle cargo container, wherein the panels are configured to be deployed in a fore-aft direction of the vehicle cargo container, wherein the panels are releasable from one another, and are retractable to enable side-access to a load space of the vehicle cargo container, wherein each of the panels is rotatable about a vertical axis of rotation, and wherein the panels are pivotally releasable from one another by rotating each panel in a same direction about its vertical axis of rotation, wherein each panel comprises a first connector at a first end of the panel and a second connector at a second end of the panel, wherein one of the first end and the second end is a fore end of the panel and the other end is an aft end of the panel, and wherein the first connector and the second connector define a plug-socket system.

According to another aspect of the invention, there is provided a vehicle cargo container comprising the apparatus.

### BRIEF DESCRIPTION OF THE DRAWINGS

For a better understanding of various examples of embodiments of the present invention reference will now be made by way of example only to the accompanying drawings in which:
FIGS. 1A-1C illustrate a side view of a trailer comprising an example interlocking panel apparatus, shown respectively with the panels interlocked, then released, then retracted;
FIGS. 2A-2D illustrate in cross-section an example interlocking panel apparatus, shown respectively with the panels interlocked, then partially released, then released, and then retracted;
FIGS. 3A-3B illustrate an end view of an example interlocking panel apparatus, shown respectively before and after rotation of a panel;
FIG. 4 illustrates an example of a mechanism configured to retract panels along a runner system;
FIGS. 5A-5B respectively illustrate examples of interlocking panels configured to convert translation to combined translation and rotation, and interlocking panels configured to be directly rotated;
FIG. 6 illustrates an example of a panel comprising interior cavities;
FIGS. 7A-7B illustrate an example of a panel comprising a seal, before and after interlocking with another panel;
FIG. 8 illustrates an example of interlocking panels comprising outboard printed layers;
FIG. 9 illustrates an example of a location-transmitting device;
FIGS. 10A-10B illustrate in cross-section an end view of an example interlocking panel apparatus, shown respectively before and after outboard-deployment and rotation of a panel;
FIGS. 11A-11B illustrate in cross-section a top view of an example outboard deployment mechanism, shown respectively before and after outboard deployment; and
FIG. 12 schematically illustrates an example of a drop-down system for a runner track.

### DETAILED DESCRIPTION OF VARIOUS EMBODIMENTS OF THE INVENTION

FIGS. 1A-1C schematically illustrate example side views of an articulated vehicle 10 comprising a tractor unit (cab) and a trailer 12. The trailer 12 can be a road vehicle trailer. The trailer 12 can comprise a semi-trailer or a full trailer, for example. In other examples, the vehicle is a box truck, and a cargo box is provided instead of a trailer.

The trailer 12 can be classed as a heavy goods vehicle trailer. The trailer 12 may have an unladen weight of at least 2000kg.

In some examples, the trailer 12 can comprise a kingpin (not shown) configured to couple to the tractor unit via a fifth-wheel coupling. In other examples, the trailer 12 can comprise a drawbar hitch (not shown).

The illustrated trailer 12 is approximately cuboidal-shaped. In other examples, the trailer 12 has a different shape such as a more aerodynamic, tapered shape.

Mutually orthogonal axes are illustrated. The x-axis extends in a fore-aft direction of the trailer 12. The y-axis extends in an inboard-outboard axis, towards or away from a side of the trailer 12 or of the interlocking panel apparatus, if different. The z-axis extends in a vertical, height direction.

The trailer 12 can have an x-axis length, excluding the tractor unit, of at least approximately seven metres. In embodiments comprising a cargo box instead of a trailer, the length may be at least approximately three metres. The trailer 12 can have an average y-axis width of at least approximately 2.4 metres. The trailer 12 can have an average z-axis height of at least approximately two metres.

A rear end of the trailer 12 is not visible but may comprise a pair of rear doors or a ramp. The rear doors can be opened to enable end access to the trailer 12.

Each side of the trailer 12 (referring to the left and right sides) can comprise an approximately rectilinear side opening configured to be covered by an interlocking panel apparatus 14. The side opening can have an area of at least three or at least five metres squared. The side opening can enable side access to an interior load space of the trailer 12 above a load deck 13 of the trailer 12.

As shown in FIG. 1A, the interlocking panel apparatus 14 comprises a plurality of interlocking panels 16. The panels 16 interlock to define, at least in part, a side of the trailer 12. In FIG. 1A, the panels 16 are in their deployed, interlocking state. The panels are deployed and spaced apart along the fore-aft direction, with a negligible panel gap therebetween. As shown in FIGS. 1B-1C, the panels 16 are releasable from one another, and retractable to enable side-access to the load space of the trailer 12.

Sixteen panels 16 are shown. It would be appreciated that the interlocking panel apparatus 14 can comprise a different number of panels, depending on the x-axis length of each panel and the length of the trailer 12. In at least some examples, the apparatus 14 comprises at least five panels for a given side of the trailer 12.

The dimensions of each panel can be optimised for strength and ease of transportation when not attached to the trailer 12. For example, the x-axis length of each panel can be less than 2.5 metres and/or less than its z-axis height. The height of a panel 16 can be a value between approximately two metres to approximately six metres, depending on the trailer height. The panels 16 can also be thin, having a y-axis thickness in the order of between approximately 10 centimetres to approximately 40 centimetres. The panels 16 can present approximately rectilinear exterior surfaces as shown in the exterior side view of FIG. 1A.

Each panel can have approximately the same dimensions and the same interlocking means. The panels 16 form a modular system.

In some examples, the panels 16 are non-structural panels. Cargo loads pass through the load deck 13 to axles of the trailer 12 without passing through the panels 16. The weight of a roof 42 of the trailer 12 can be borne by a body frame of the trailer 12, without passing through the panels 16.

The panels 16 may be sufficiently strong and rigid to avoid aerodynamic flexing or flutter, and to resist crowbar attacks. For example, the panels 16 may be formed from a rigid polymeric material such as polyvinyl chloride (PVC). In some examples, the PVC material can have a Shore D hardness of between approximately 50 and approximately 80. In some examples, the PVC material is recycled material. The density of a completed panel can be less than approximately 1550kg/m³.

In some examples, the material is formed into the panel shapes by an extrusion process. The panels 16 can have an approximately constant cross-section shape.

For some implementations, a different material could be used for the panels 16, such as a metallic material, Polyethylene terephthalate (PET), Glass Fiber Reinforced Plastic (GFRP), wood, or similar. Metallic materials such as steel or aluminium could be used for high-security cargo.

FIG. 1B shows the panels 16 after they have been released. In the illustrated example, but not necessarily all examples, the panels 16 have been released by rotating each panel about a vertical z-axis of rotation 43 passing through a centroid region of each panel (see FIG. 5A). The rotation of each panel is in a same direction as shown.

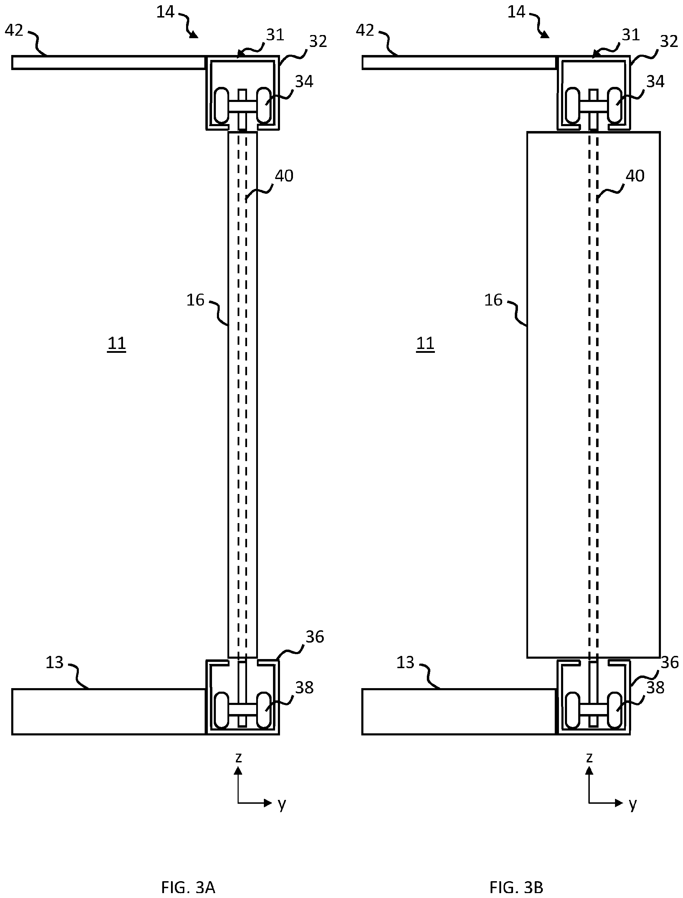

After the rotation, the panels 16 can be retracted by translating the panels 16 parallel to the plane of the side of the trailer 12 (e.g., along the x-axis) towards the front of the trailer 12 (towards the tractor unit). The panels 16 can be attached to a runner system 31 shown in FIGS. 3A-3B, enabling the panels 16 to slide or roll along the x-axis. Alternatively, the panels 16 can be retractable in the opposite direction, towards the rear of the trailer 12.

In some examples, a first subset of the panels 16 is retractable towards the front of the trailer 12, and a second subset of the panels 16 is retractable towards the rear of the trailer 12.

FIG. 1B shows the panels 16 partially retracted. The panels 16 can be retracted more if desired. FIG. 1C shows the panels 16 fully retracted. In the fully retracted state, the panels 16 cover no more than approximately 49% of the side opening of the trailer 12, maximizing side access.

In some examples, the panels 16 can be locked in place by an interference (not shown) when fully retracted. For example, a retracting mechanism 400 as schematically illustrated in FIG. 4 may comprise a ratchet. In some examples, the panels 16 can be locked in place when partially retracted. A ratchet mechanism is an example of suitable means for flexibly allowing an operator to choose how far to retract the panels 16.

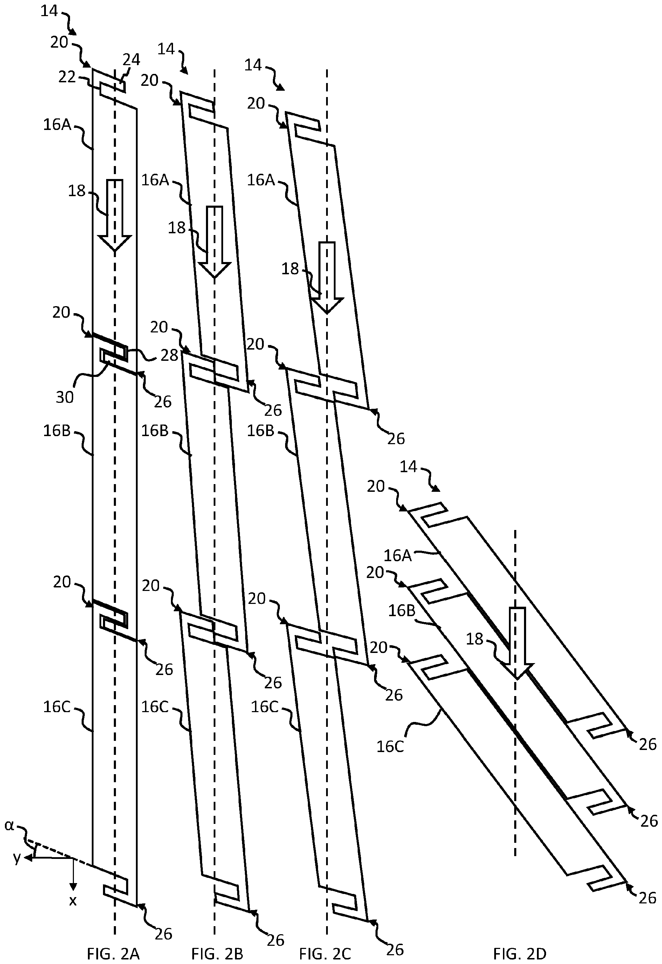

FIGS. 2A-2D illustrate an example of how the panels 16 can interlock. They illustrate in cross-section a top view of the interlocking panel apparatus 14, shown respectively with the panels 16 interlocked (FIG. 2A), then partially released (FIG. 2B), then released (FIG. 2C), and then retracted (FIG. 2D).

Each of the panels 16 comprises a first connector 20 and a second connector 26 separated from one another in the fore-aft direction. The first connector 20 is configured to engage with a second connector 26 of a neighbouring panel. The second connector 26 is configured to engage with a first connector 20 of a neighbouring panel.

In at least some examples, the first connector 20 is at a first end of the panel 16 in the x-axis, and the second connector 26 is at a second end of the panel 16 in the x-axis.

In the illustrated example, the first connector 20 is at the aft end of each panel 16A-16C and the second connector 26 is at the fore end of each panel 16A-16C. However, this can depend on the direction of intended retraction, which in FIGS. 2A-2D is in the fore direction.

The first connector 20 and the second connector 26 define a plug-socket system. The first connector 20 and the second connector 26 can comprise opposite-facing plugs and sockets that are engageable with each other.

FIG. 2A shows panels 16A-16C in interlocking engagement, with the panels parallel and arranged end-to-end.

As labelled in FIG. 2A, the first connector 20 comprises an inboard-facing protrusion 24 and an inboard-facing socket 22. The term 'inboard-facing' means that the depth of the inboard-facing socket 22 extends through a y-axis thickness of the panel, mostly or entirely in the y-axis direction. Likewise, the inboard-facing protrusion 24 extends in the y-axis thickness direction. The inboard-facing socket 22 of each panel 16A-16C is open at an inboard side of the panel (facing a load space 11).

The inboard-facing socket 22 is not necessarily parallel to the y-axis - in the illustration, all sockets are at an angle α relative to the y-axis. The angle α can have a value between approximately 10 degrees and approximately 90 degrees.

The second connector 26 comprises an outboard-facing protrusion 30 and an outboard-facing socket 28. Substantially the same angle α can be used. The outboard-facing socket 28 is open at an outboard side of the panel, facing away from the load space 11. The angle α results in each panel 16A-16C having a skewed cross-section, similar to a parallelogram.

The inboard-facing protrusion 24 can function as a plug configured to engage with an outboard-facing socket 28 of another panel.

The inboard-facing socket 22 can be configured to receive an outboard-facing protrusion 30 of another panel.

The outboard-facing protrusion 30 can function as a plug configured to engage with an inboard-facing socket 22 of another panel.

The outboard-facing socket 28 can be configured to receive an inboard-facing protrusion 24 of another panel.

In some examples, each fore/aft end of a panel 16 comprises a hook-shaped protrusion in cross-section (e.g., L-shaped hook). A throat of the hook functions as the socket into which the hook-shaped protrusion of another panel can be inserted. The hook may be extruded so the socket may be an elongate channel-shaped socket. to define a channel and a protrusion. It would be understood that the hook is either facing inboard or outboard depending on whether the hook is at the fore end or the aft end.

In some examples, the first and/or second connectors 20, 26 are integral parts of the panel 16A-16C. Each panel 16A-16C can be moulded or extruded with the connectors in a single-shot. If the panel is an extruded panel, the first and/or second connectors 20, 26 may be part of the extrusion, rather than separate or over-moulded components.

Therefore, the first and/or second connectors 20, 26 can extend up a substantial height of the panel. Each panel may be configured to interlock with a neighbouring panel continuously over more than 50% of its height, or even more than 80% of its height.

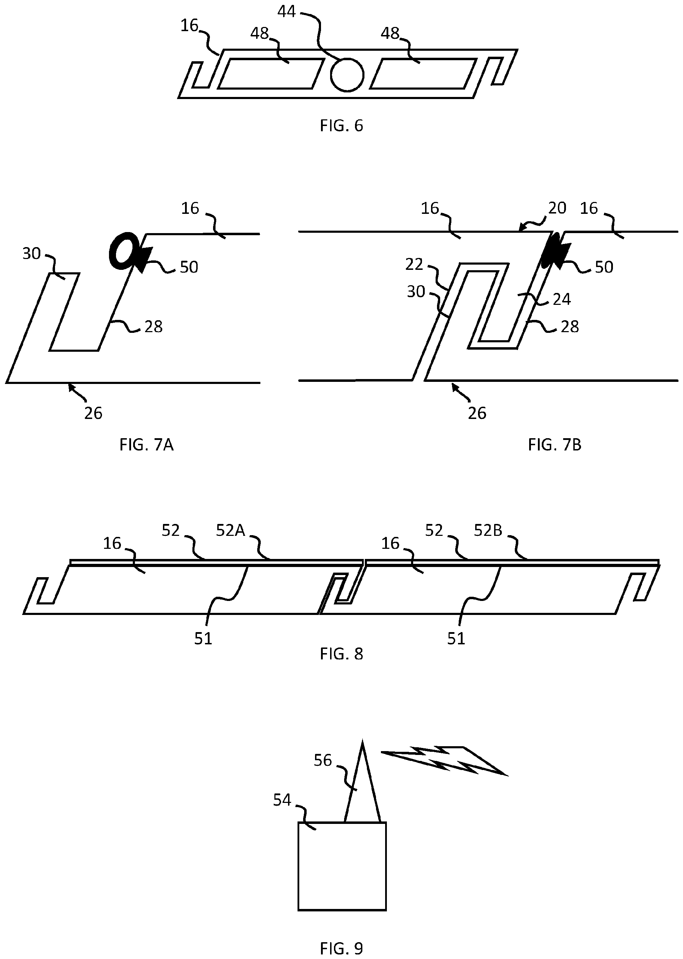

The hook shapes and continuous nature of the connectors render it impossible to insert a pry bar straight through a panel gap (FIG. 7B) to the load space. This makes it difficult to gain leverage at the panel gaps.

Even if the first and/or second connectors 20, 26 are discontinuous along the height of a panel, they may be configured so that each panel interlocks cumulatively over more than 50% of its height.

As shown in FIGS. 2B-2D, the angle α enables the panels 16A-16C to slip out of engagement to cause release, when subjected to a force component 18 in a direction of retraction. If the direction of retraction is the fore direction, as shown, the force component 18 is in the fore direction. Force in the aft direction will not cause the panels 16A-16C to disengage.

In addition, the angle α of the first and second connectors 20, 26 means that if a purely rotational force is applied about the vertical axis of rotation 43, the first connector 20 and the second connector 26 of neighbouring panels will interfere with each other.

In FIG. 2A, a translation force 18 in a fore direction to a first panel 16A or each of the panels 16A-16C causes the second connector 26 of the first panel 16A to abut and bias against the first connector 20 of a second interlocked panel. Force would be transmitted to an adjacent second panel 16B through the abutment.

If there is no angle α at the abutment, the force 18 would be reacted against and the panels 16A-16C would stay interlocked.

However, the angle α has a sufficient value that force through the abutment is not entirely perpendicular to the surface of abutment. There is a small tangential force component. The tangential force imparted by the first panel 16A results in a torque on the second panel 16B about the vertical axis of rotation 43 of the second panel 16B. A tangential reaction force imparted by the second panel 16B on the first panel 16A results in a torque on the first panel 16A about the vertical axis of rotation 43 of the first panel 16A.

The torques are enough to cause the abutting surfaces to slip, causing rotation of both adjacent panels 16A, 16B. Therefore, the second connector 26 of the first panel 16A slips inboard so that its outboard-facing protrusion 30 exits the inboard-facing socket 22 of the first connector 20 of the second panel 16B. The first connector 20 of the second panel 16B slips outboard so that its inboard-facing protrusion 24 exits the outboard-facing socket 28 of the second connector 26 of the first panel 16A.

The rotation of the second panel 16B also causes a chain reaction wherein the second connector 26 of the second panel 16B, at the opposite end of the second panel 16B, disengages the first connector 20 of a third panel 16C downstream of the second panel 16B.

In FIG. 2B, rotation has occurred but the outboard-facing protrusion 30 of the first panel 16A is still partially within the inboard-facing socket 22 of the second panel 16B. Likewise, the inboard-facing protrusion 24 of the second panel 16B is still partially within the outboard-facing socket 28 of the first panel 16A.

In FIG. 2C, further translation and slip have occurred, so that the outboard-facing protrusion 30 of the first panel 16A is outside the inboard-facing socket 22 of the second panel 16B. The inboard-facing protrusion 24 of the second panel 16B is outside the outboard-facing socket 28 of the first panel 16A. Therefore, the panels 16A, 16B are fully disengaged. Notably, both connectors 20, 26 were disengaged by the same translation and rotation about the same axis.

As shown in FIG. 2D, further application of the force 18 will result in the panels 16A-16C freely rotating about their vertical axes into a diagonal, parallel stacked orientation. Continued application of the force 18 retracts the panels 16A-16C. Each panel has rotated in the same direction (anti-clockwise in the example).

FIGS. 2A-2D relate to retraction in a fore direction. If the direction of retraction is instead in the aft direction, the value of α relative to the y-axis would have the opposite sign.

An advantage of the above approach is that only a single force input is required to cause combined release and retraction. This obviates the requirement for multiple actuators or mechanisms which waste time and weight.

However, it would be appreciated that in some examples, additional steps may be required to cause release. For example, a releasable rotation lock (not shown) can be provided to prevent rotation. In some examples, an operator input for the retracting mechanism 400 may be protected in a lockable unit such as a cabin of the cab, or a unit attached to the trailer 12.

It would also be appreciated that in some designs, release and retraction may be separate. The angle α may be zero, and instead a different means can be provided for rotating the panels 16A-16C.

The interlocking means shown in FIGS. 2A-2D is secure in nature. Panel gaps are complex shapes, so a pry bar cannot be inserted straight through a panel gap.

Further, the panel gaps at the interlocks between the panels 16A-16C can be minimised to reduce lost motion and improve resistance to prying. Therefore, if an intruder standing outside the trailer 12 can somehow apply a force to a single panel in the direction of retraction, the lost motion between the panels 16A-16C will be taken up without the single panel becoming disengaged. The intruder will then have to act against the inertia of all the panels 16A-16C, somehow starting a combined translation and rotation of all of the panels 16A-16C.

Unauthorised access can be made even more difficult by means of a releasable rotation lock such as a ratchet device or other pawl-like mechanism that must first be released before translation in a retraction direction is possible. As mentioned before, translation in the retraction direction may be necessary for causing rotation.

FIGS. 3A-3B illustrate an end view of the interlocking panel apparatus 14, shown respectively before and after rotation of a panel 16. These Figures show how the panel 16 can be secured to the trailer 12.

FIG. 3A illustrates a runner system 31 configured to support pivots 40 of the panels 16. The pivots 40 are coaxial with the vertical axes of rotation 43 of the panels 16, extending through the centroid region of each panel. A pivot 40 can either be a separate pin-shaped component inserted or over-moulded in a pin aperture of the panel, or a pivot 40 can be a moulded part of the panel.

The illustrated runner system 31 is configured to support the panels 16 from above and from below, via pivots 40. The runner system 31 comprises an upper channel 32 functioning as a runner track and containing upper runners 34, and a lower channel 36 functioning as a runner track and containing lower runners 38. The upper channel 32 supports the panels 16 from above. The lower channel 36 supports the panels 16 from below. The illustrated runners 34, 38 are wheeled, but in other examples could be sliding runners.

Each channel 32, 36 can comprise a continuous channel extending in a fore-aft direction (x-axis). The channel can comprise a track along which the runners can roll or slide. Each runner within a channel can comprise a wheel set coupled to a pivot 40. Each runner can comprise a plurality of wheel sets. The wheel sets of each runner can be configured to roll along the channel as the panels 16 are retracted or deployed.

The load deck 13 and the roof 42 of the trailer 12 are schematically illustrated. The upper channel 32 can be secured to the roof 42. The lower channel 36 can be secured to the load deck 13.

The channels 32, 36 can be secured outboard of the roof 42 and outboard of the load deck 13, as shown. Alternatively, the channels can be secured internally within a load deck structure and within a roof structure, within an envelope of the load deck 13 and the roof 42. In further examples, the lower channel 36 could be tucked partially under the load deck 13.

The interlocking panel apparatus 14, with the runner system 31, may be retrofittable to existing trailers. The upper and lower channels 32, 36 may therefore not form part of the underlying body structure of the trailer 12, although they may be reinforcing.

The channels 32, 36 may comprise partially enclosed channels, comprising an elongate slit through which the pivots 40 of the panels 16 can extend. The width of the slit can be small enough and close enough to a top or bottom of the panel 16 that it is not possible to insert a pry bar into the slit.

A panel 16 can either comprise a single continuous pivot 40 linking the panel 16 to the upper and lower runners 34, 38, or a pair of top and bottom pivots 40 respectively linking the panel 16 to the upper and lower runners 34, 38.

In the example of FIG. 3A, but not necessarily all examples, the bottom of the panel 16 is above the load deck 13 and the top of the panel 16 is below the roof 42. Therefore, the panel 16 can freely rotate as shown in FIG. 3B. The orientation of FIG. 3B corresponds to the diagonally stacked orientation of FIG. 2D.

FIG. 4 illustrates an example retracting mechanism 400 for the upper runners 34 and/or for the lower runners 38. The retracting mechanism 400 may comprise a pulley or winch system or another appropriate mechanism.

The retracting mechanism 400 is operable by an actuator 402. In one example, the actuator 402 comprises a hand actuator, such as a hand crank. Additionally, or alternatively, the actuator 402 can comprise an electrically-powered actuator configured to retract and/or deploy the panels 16 automatically, in dependence on an operator initiation signal received from an appropriate human-machine interface (HMI). The HMI could be within a cabin of the cab, or could be part of the trailer 12.

In some, but not necessarily all examples, the retracting mechanism 400 may be configured to move a sled 404 along the upper channel 32 or the lower channel 36. The sled 404 may be slidable or may be wheeled. The sled 404 may contact one of the upper runners 34 or one of the lower runners 38, so that movement of the sled 404 in a retracting direction will move the runners 34/38 to stack the panels 16 together.

Continued rotation of the actuator 402 may cause the combined rotation and translation of the panels 16, so that the panels 16 stack at one end of the trailer 12 or the other. For closure, the actuator 402 may be rotated in reverse or a separate mechanism may be provided.

FIG. 5A is a cross-section of a pair of interlocking panels 16, showing more clearly the vertical axis of rotation 43 at the centroid region. A pivot 40 is coaxial with the vertical axis of rotation 43. The panel 16 is freely rotatable/pivotable about the non-rotatable pivot 40, as long as there is no interference with a neighbouring panel as described earlier.

FIG. 5B illustrates another technique for rotating the panels 16. In this example, a release actuator arrangement 45 is provided, which is configured to rotate actuatable pivots 46 to rotate each panel. The release actuator arrangement 45 can comprise one or more actuators coupled to the actuatable pivots 46 via one or more mechanisms, such as gearing. Optionally, the release actuator arrangement 45 may reside in the upper channel 32 and/or in the lower channel 36, instead of runners.

Alternatively, actuation force can be provided to a different location on the panel 16 than through the actuatable pivot 46.

The actuatable pivot 46 can have any appropriate construction capable of rotating the panel. An oval-shaped pivot 46 is illustrated because this shape can rotate the panel. However, any other shaped actuatable pivot 46 is possible, including a circular pin that is secured in place.

The release actuator arrangement can comprise an actuator for each panel, for example, or a single actuator connected to a plurality of panels 16 via a linkage.

As shown in FIG. 5B, the first connector 20 and the second connector 26 of a panel 16 may be approximately rectilinear. This corresponds to an angle α of approximately zero, to prevent interference between the panels 16 when they are rotated.

FIG. 6 illustrates an example cross-section of a panel 16 that comprises one or more interior cavities 48. An interior cavity 48 reduces the mass of the panel. The interior cavity 48 may be fully enclosed in cross-section, and optionally can be enclosed at the top and bottom. In some examples, the panel 16 can comprise a plurality of interior cavities 48. In some examples, at least 80% of a cross-sectional area of a panel 16 can be empty space.

FIGS. 7A-7B illustrate an example seal 50 configured to seal a panel gap where each panel meets a neighbouring panel. The seal 50 can extend vertically along the z-axis, along an edge of the panel gap.

The seal 50 can comprise a sealing strip such as a moulded sealing strip, as shown. Alternatively, the sealing strip 50 can comprise a bead of applied sealant. In further examples, the seal 50 can comprise a foam pad.

The seal 50 can comprise a resiliently compressible material such as rubber. The illustrated seal 50 comprises a hollow (e.g., tubular) cross-section which further increases its compressibility when a compression force in the x-y plane is applied.

The illustrated seal 50 is secured to a side surface of a socket of the panel 16 by any appropriate means such as a dovetail joint. The socket may be the outboard-facing socket 28. The seal 50 is compressed by a side of an inboard-facing protrusion 24 inserted into the outboard-facing socket 28, as shown in FIG. 7B. Alternatively, or additionally, a seal is secured to the inboard-facing socket 22, or to one of the protrusions.

The seal 50 enables the interlocking panel apparatus 14 to seal a climate-controlled load space with minimal heat transfer. In addition, the seal 50 prevents water ingress, especially if located to an outboard side of the panels 16.

FIG. 8 illustrates an example of an outboard printed layer 52 applied discontinuously to the panels 16 by removable adhesive 51. The outboard printed layer 52 can comprise a durable polymeric material such as vinyl.

The outboard printed layer 52 is separated into panel-sized sections 52A, 52B, each of which is adhered to a panel 16. Therefore, a panel gap is maintained.

The removable adhesive 51 can comprise any appropriate adhesive with high peel strength that facilitates residue-free removal of the outboard printed layer 52 from a panel 16. An example of such an adhesive 51 is a pressure sensitive adhesive (PSA). In some examples, the adhesive 51 comprises a water-based PSA such as a water-based acrylic PSA, or comprises a silicone-based PSA.

The removable adhesive 51 and the small size of each outboard printed layer section 52A, 52B makes the regular application and replacement of graphics to the side of the trailer 12 quick and easy.

In some examples, the panels 16 are easily removable from the side of the trailer 12 so that graphics do not have to be applied in-situ. The panels 16 can be removable from the runners by lowering the lower channel 36 to provide enough room to manipulate the panels 16 to a point where the panels 16 can become disengaged from the runners 34, 38.

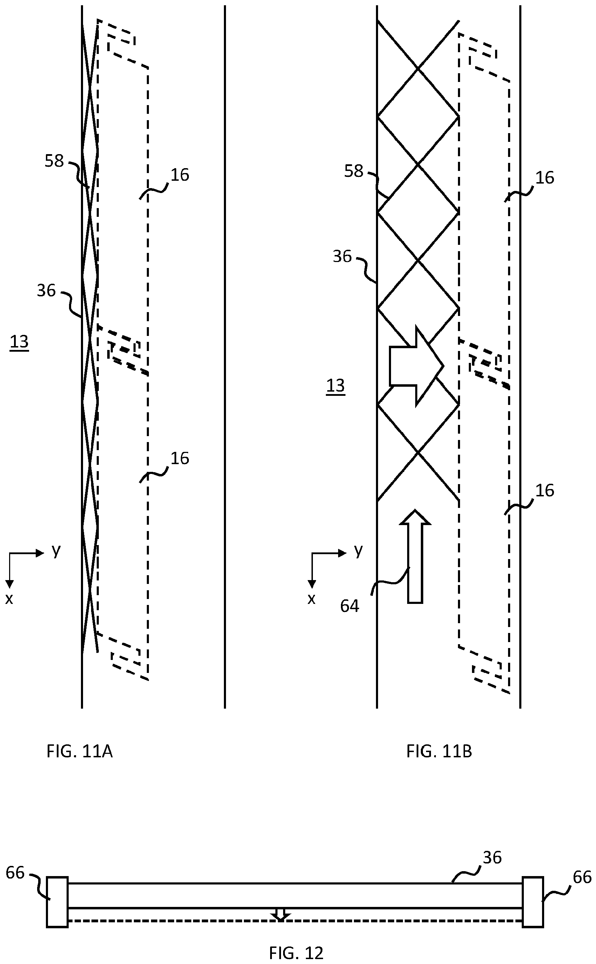

In some examples, the lower channel 36 is lowerable by a drop-down system 66 as schematically illustrated in FIG. 12. The drop-down system 66 may be inaccessible to unauthorized users. The drop-down system 66 may be a manual actuator or an electrically-powered actuator or the like.

In some example implementations, the panels 16 are sufficiently flexible for an operator to hand-flex a panel 16 to disengage the panel 16 from at least one runner 34. For example, the panel 16 may be manually flexed enough to pull a pivot 40 out of a pivot aperture in the runner 34. Once released from a runner, the panel 16 can be easily slid out of a corresponding pivot aperture in the other runner (e.g., 38). The flex-release operation may require the lower channel 36 to have been lowered first.

FIG. 9 illustrates an example of a location tracking device 54 that may be provided with the interlocking panel apparatus 14. This enables a maintenance engineer or a fitter of outboard printed layers 52 to visit the trailer 12 according to a maintenance schedule.

The location tracking device 54 can be configured to track location using any appropriate location tracking technology, such as global positioning system technology. The location tracking device 54 can comprise any appropriate radio frequency transmitter or transceiver 56 for wirelessly sending location information, such as coordinates, to a server.

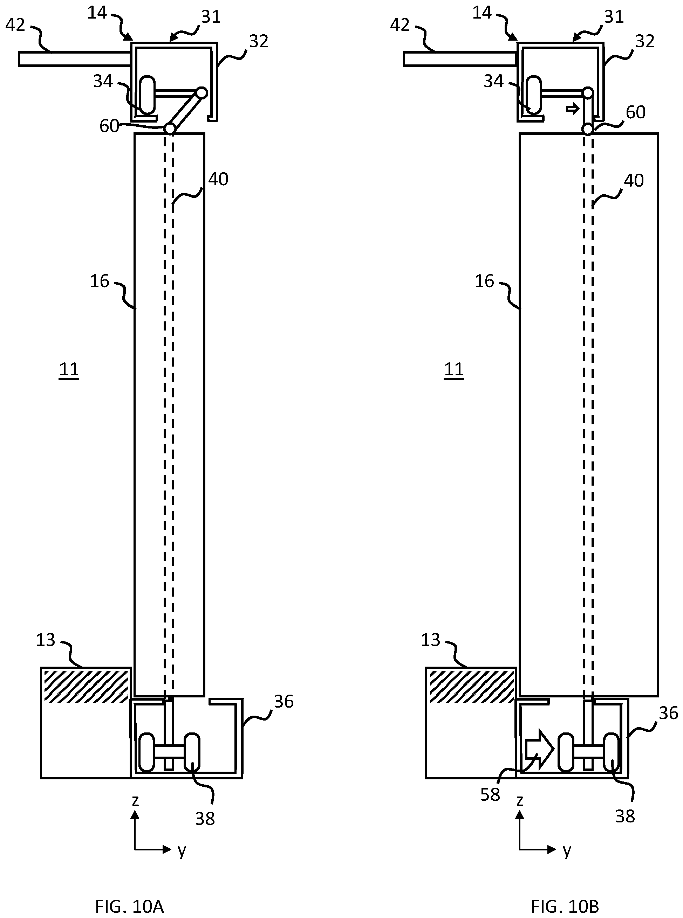

FIGS. 10A-10B illustrate an example end view of an interlocking panel apparatus 14 that is configured to deploy outboard in order to give the panels 16 space to rotate without hitting the load deck 13.

In this example, unlike FIGS. 3A-3B, the bottom of a panel 16 is below the load deck 13 (and/or the top of a panel 16 is above the roof 42). Therefore, the load deck 13 prevents rotation of the panels 16 because the rotation would cause one end of a panel 16 to move inboard and hit the load deck 13. This arrangement can be stronger because the load deck 13 reacts against y-axis displacement of the panels 16. However, it is useful to provide a means for deploying the panels 16 outboard of the load deck 13 to enable the panels 16 to be rotated for retraction.

Therefore, the apparatus 14 comprises an outboard deployment mechanism 58, 60 configured to apply forces to deploy the panels 16 in an outboard direction, to prevent the panels 16 from intruding into the load space 11 when rotated and/or to prevent the panels 16 from colliding with a side of the load deck 13 below which the panels 16 extend.

FIG. 10A illustrates a panel 16 before deployment, and FIG. 10B illustrates a panel 16 after outboard deployment and after rotation.

Two examples of an outboard deployment mechanism are shown. The first type of outboard deployment mechanism 58 is shown in the lower channel 36 in FIG. 10B and is shown in FIGS. 11A-11B. The second type of outboard deployment mechanism 60 is shown in the upper channel 32 in FIGS. 10A and 10B.

The same type or different types of outboard deployment mechanism 58, 60 may be used for each channel 32, 36.

The first type of outboard deployment mechanism 58 is configured to deploy runners 38 (or 34) outboard. In the example of FIG. 10B, but not necessarily all examples, the lower channel 36 is wide in the y-axis, so that the lower runners 38 can roll/slide outboard when actuated by the first appropriate outboard deployment mechanism 58.

The second type of outboard deployment mechanism 60 comprises a tiltable linkage connecting the runner 34 (or 38) to the pivot 40. The linkage 60 can swing (tilt) outboard or inboard. In some examples, the linkage 60 is actuated by a cam actuator. When the panels 16 are interlocked, as shown in FIG. 10A, the linkage 60 may be at an inboard tilted angle. When the panels 16 are deployed outboard for retraction, as shown in FIG. 10B, the linkage 60 is shown at a straightened angle, more vertical than in FIG. 10A, or may be tilted outboard.

The outboard deployment mechanisms 58, 60 may be actuated by any appropriate actuator such as a cam actuator, a winch system, a pneumatic piston, etc.

FIGS. 11A-11B illustrate an example of an outboard deployment mechanism 58 within the lower channel 36 (and/or upper channel 32), placed next to the lower runner 38 (under the dashed line panels 16). In this example, the outboard deployment mechanism 58 comprises a scissor mechanism, formed by a criss-cross pattern of elongate members. The scissor mechanism 58 can extend in the x-axis. A characteristic of a scissor mechanism is that it becomes significantly wider when compressed 64 and narrower when stretched. Therefore, the scissor mechanism 58 can be compressed 64 to push the lower runner 38 in the outboard direction by widening, and stretched to reset the position of the lower runner 38.

An operator may be able to actuate the scissor mechanism 58 by actuating a variable length pulley system that compresses/stretches the scissor mechanism 58.

It would be appreciated that the outboard deployment mechanism 58 could take various other forms, such as a cam mechanism, a rack and pinion, a linear actuator, etc.

In some examples, the retracting mechanism 400 of FIG. 4 is configured to connect to the outboard deployment mechanism 58, 60. Rotation of the actuator 402 may first actuate the outboard deployment mechanism 58, 60, moving the panels 16 along away from the trailer body. Continued rotation of the actuator 402 in the same direction may retract the panels 16.

The preceding description assumes a generally rectilinear trailer. In some examples, the interlocking panel apparatus 14 is applied to different trailer shapes.

For example, for a step-down trailer (drop deck/lowboy trailer), a door arrangement may be provided beneath the apparatus, at a stepped down part of the trailer (dropped deck location). The door arrangement comprises at least one door that can be opened while the panels 16 are retracted, to provide full access.

For trailers that have a curved top for aerodynamics, the panels 16 may have variable heights to follow the variable height of the trailer. The vertical separation between the upper runner 34 and the lower runner 36 may be substantially constant, as well as the pin-to-pin distance of each pivot 40. The panels 16 may be able to slide up and down the pivots 40 if necessary.

Although embodiments of the present invention have been described in the preceding paragraphs with reference to various examples, it should be appreciated that modifications to the examples given can be made without departing from the scope of the invention as claimed. For example, the vehicle cargo container may be an ISO 'intermodal' container.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. An apparatus (14) configured to form a side of a vehicle cargo container (12), the apparatus comprising:
a plurality of panels (16) configured to interlock with one another to define, at least in part, a side of the vehicle cargo container, wherein the panels are configured to be deployed in a fore-aft direction of the vehicle cargo container, wherein the panels are releasable from one another, and are retractable to enable side-access to a load space of the vehicle cargo container, wherein each of the panels is rotatable about a vertical axis of rotation (43), wherein the panels are pivotally releasable from one another by rotating each panel in a same direction about its vertical axis of rotation, **characterized in** each panel comprises a first connector (20) at a first end of the panel and a second connector (26) at a second end of the panel, wherein one of the first end and the second end is a fore end of the panel and the other end is an aft end of the panel, and wherein the first connector and the second connector define a plug-socket system.

2. The apparatus of claim 1, wherein each panel comprises an outboard printed layer (52) adhered to the panel by removable adhesive (51).

3. The apparatus of claim 2, wherein the removable adhesive comprises a pressure-sensitive adhesive.

4. The apparatus of any preceding claim, wherein the panels are configured to interlock such that:
the panels interfere with each other against rotation about the vertical axis when subjected to a torque about the vertical axis without a concurrent force component in a direction of retraction; and
the panels are rotatable about the vertical axis when subjected to a force component in a direction of retraction.

5. The apparatus of any one of claims 1 to 3, comprising a release actuator arrangement (45) configured to rotate each panel about the vertical axis of rotation to cause pivotal release.

6. The apparatus of any preceding claim,
wherein the first connector comprises an inboard-facing protrusion (24) and an inboard-facing socket (22),
wherein the second connector comprises an outboard-facing protrusion (30) and an outboard-facing socket (28),
wherein the inboard-facing protrusion of one of the panels is configured to interlock with the outboard-facing socket of another one of the panels, and wherein the outboard-facing protrusion of the one of the panels is configured to interlock with the inboard-facing socket of a third one of the panels.

7. The apparatus of claim 6, wherein the inboard-facing protrusion, the inboard-facing socket, the outboard-facing protrusion and the outboard-facing socket are angled to slip to cause release when subjected to a force component in a direction of retraction.

8. The apparatus of any preceding claim, wherein each panel has a length in the fore-aft direction, a height, and a thickness, and wherein the length is a value less than 2.5 metres.

9. The apparatus of any preceding claim, wherein each panel comprises a seal (50) configured to seal a panel gap where each panel meets a neighbouring panel.

10. The apparatus of any preceding claim, wherein each panel comprises an interior cavity (48) and/or wherein each panel comprises a polymeric material having a density less than 1500kg/m³.

11. The apparatus of any preceding claim, wherein each panel is vertically elongated, and wherein the apparatus comprises a retractor (31) configured to retract the panels in the fore-aft direction.

12. The apparatus of claim 11, wherein the retractor comprises a runner system (31) configured to support pivots (40) of the panels, and a runner actuator (402) configured to retract the panels along the runner system.

13. The apparatus of claim 12, wherein the pivots supported by the runner system comprise pins.

14. A vehicle cargo container (12) comprising the apparatus (14) of any preceding claim.

## Patentansprüche

1. Vorrichtung (14), die konfiguriert ist, eine Seite eines Fahrzeugfrachtcontainers (12) zu bilden, wobei die Vorrichtung umfasst:
eine Vielzahl von Paneelen (16), die so konfiguriert sind, dass sie ineinander eingreifen, um eine Seite des Fahrzeugfrachtcontainers zumindest teilweise zu definieren, wobei die Paneele so konfiguriert sind, dass sie in einer Vorwärts-Rückwärts-Richtung des Fahrzeugfrachtcontainers entfaltet werden können, wobei die Paneele voneinander lösbar sind und zurückziehbar sind, um einen seitlichen Zugang zu einem Laderaum des Fahrzeugfrachtcontainers zu ermöglichen, wobei jedes der Paneele um eine vertikale Drehachse (43) drehbar ist, wobei die Paneele schwenkbar voneinander lösbar sind, indem jedes Paneel in derselben Richtung um seine vertikale Drehachse gedreht wird, **dadurch gekennzeichnet, dass** jedes Paneel einen ersten Verbinder (20) an einem ersten Ende des Paneels und einen zweiten Verbinder (26) an einem zweiten Ende des Paneels umfasst, wobei eines von dem ersten Ende und dem zweiten Ende ein vorderes Ende des Paneels und das andere Ende ein hinteres Ende des Paneels ist, und wobei der erste Verbinder und der zweite Verbinder ein Stecker-Buchsen-System definieren.

2. Vorrichtung nach Anspruch 1, wobei jedes Paneel eine äußere bedruckte Schicht (52) umfasst, die durch einen entfernbaren Klebstoff (51) an das Paneel geklebt ist.

3. Vorrichtung nach Anspruch 2, wobei der entfernbare Klebstoff einen druckempfindlichen Klebstoff umfasst.

4. Vorrichtung nach einem der vorhergehenden Ansprüche, wobei die Paneele so konfiguriert sind, dass sie ineinander greifen, so dass:
die Paneele sich gegen eine Drehung um die vertikale Achse gegenseitig behindern, wenn sie einem Drehmoment um die vertikale Achse ohne eine gleichzeitige Kraftkomponente in einer Rückzugsrichtung ausgesetzt sind; und
die Paneele um die vertikale Achse drehbar sind, wenn sie einer Kraftkomponente in einer Rückzugsrichtung ausgesetzt sind.

5. Vorrichtung nach einem der Ansprüche 1 bis 3, umfassend eine Auslösebetätigungsanordnung (45), die konfiguriert ist, jede Platte um die vertikale Drehachse zu drehen, um eine Schwenkauslösung zu bewirken.

6. Vorrichtung nach einem der vorhergehenden Ansprüche,
wobei der erste Verbinder einen nach innen weisenden Vorsprung (24) und eine nach innen weisende Buchse (22) aufweist,
wobei der zweite Verbinder einen nach außen gerichteten Vorsprung (30) und eine nach außen gerichtete Buchse (28) umfasst,
wobei der nach innen weisende Vorsprung einer der Paneele so konfiguriert ist, dass er mit der nach außen weisenden Buchse einer anderen der Paneelen ineinandergreift, und wobei der nach außen weisende Vorsprung der einen der Paneele so konfiguriert ist, dass er mit der nach innen weisenden Buchse einer dritten der Paneelen ineinandergreift.

7. Vorrichtung nach Anspruch 6, wobei der nach innen weisende Vorsprung, die nach innen weisende Buchse, der nach außen weisende Vorsprung und die nach außen weisende Buchse so abgewinkelt sind, dass sie gleiten, um ein Lösen zu bewirken, wenn sie einer Kraftkomponente in einer Rückzugsrichtung ausgesetzt sind.

8. Vorrichtung nach einem der vorhergehenden Ansprüche, wobei jedes Paneel eine Länge in Längsrichtung, eine Höhe und eine Dicke aufweist und wobei die Länge einen Wert von weniger als 2,5 Metern hat.

9. Vorrichtung nach einem der vorhergehenden Ansprüche, wobei jedes Paneel eine Dichtung (50) umfasst, die konfiguriert ist, einen Paneelspalt abzudichten, wo jedes Paneel auf ein benachbartes Paneel trifft.

10. Vorrichtung nach einem der vorhergehenden Ansprüche, wobei jedes Paneel einen inneren Hohlraum (48) umfasst und/oder wobei jedes Paneel ein polymeres Material mit einer Dichte von weniger als 1500 kg/m³ umfasst.

11. Vorrichtung nach einem der vorhergehenden Ansprüche, wobei jede Paneele vertikal langgestreckt ist und wobei die Vorrichtung einen Rückzieher (31) umfasst, der konfiguriert ist, die Paneele in der Vorwärts-Rückwärts-Richtung zurückzuziehen.

12. Vorrichtung nach Anspruch 11, wobei die Aufrollvorrichtung ein Läufersystem (31) umfasst, das konfiguriert ist, Drehachsen (40) der Paneele zu tragen, und einen Läuferaktuator (402), der konfiguriert ist, die Paneele entlang des Läufersystems zurückzuziehen.

13. Vorrichtung nach Anspruch 12, wobei die von dem Läufersystem gelagerten Drehachsen Stifte umfassen.

14. Fahrzeugfrachtcontainer (12) umfassend die Vorrichtung (14) nach einem der vorhergehenden Ansprüche.

## Revendications

1. Un appareil (14) configuré pour former un côté d'un conteneur (12) de chargement pour véhicule, l'appareil comprenant :
une pluralité de panneaux (16) configurés pour venir en inter-engagement les uns avec les autres de façon à définir, au moins en partie, un côté du conteneur de chargement de véhicule, les panneaux étant configurés pour être déployés dans une direction avant-arrière du conteneur de chargement de véhicule, les panneaux étant aptes à être détachés l'un de l'autre et étant rétractables pour permettre un accès latéral à un espace de chargement du conteneur de chargement de véhicule, chacun des panneaux étant aptes à tourner autour d'un axe de rotation vertical (43), les panneaux étant aptes à être détachés l'un de l'autre de manière pivotante en faisant tourner chaque panneau dans un même sens autour de son axe vertical de rotation, **caractérisé en ce que** chaque panneau comprend un premier connecteur (20) à une première extrémité du panneau et un deuxième connecteur (26) à une deuxième extrémité du panneau, l'une parmi la première extrémité et la deuxième extrémité étant une extrémité avant du panneau et l'autre extrémité étant une extrémité arrière du panneau, et le premier connecteur et le deuxième connecteur définissent un système à organe de prise mâle et organe de prise femelle.

2. L'appareil selon la revendication 1, dans lequel chaque panneau comprend une couche imprimée extérieure (52) collée au panneau par un adhésif amovible (51).

3. L'appareil selon la revendication 2, dans lequel l'adhésif amovible comprend un adhésif sensible à la pression.

4. L'appareil selon l'une quelconque des revendications précédentes, dans lequel les panneaux sont configurés pour venir en inter-engagement de sorte que :
les panneaux interfèrent les uns avec les autres contre la rotation autour de l'axe vertical lorsqu'ils sont soumis à un couple autour de l'axe vertical sans composante de force concurrente dans une direction de rétraction ; et
les panneaux sont aptes à tourner autour de l'axe vertical lorsqu'ils sont soumis à une composante de force dans une direction de rétraction.

5. L'appareil selon l'une quelconque des revendications 1 à 3, comprenant un agencement (45) formant actionneur de libération, configuré pour faire tourner chaque panneau autour de l'axe vertical de rotation pour provoquer une libération par pivotement.

6. L'appareil selon l'une quelconque des revendications précédentes,
dans lequel le premier connecteur comprend une saillie (24) orientée vers l'intérieur et une douille (22) orientée vers l'intérieur,
dans lequel le deuxième connecteur comprend une saillie (30) orientée vers l'extérieur et une douille (28) orientée vers l'extérieur,
dans lequel la saillie tournée vers l'intérieur de l'un des panneaux est configurée pour venir en inter-engagement avec la douille tournée vers l'extérieur d'un autre des panneaux, et
dans lequel la saillie tournée vers l'extérieur de l'un des panneaux est configurée pour venir en inter-engagement avec la douille orientée vers l'intérieur d'un troisième des panneaux.

7. L'appareil selon la revendication 6, dans lequel la saillie orientée vers l'intérieur, la douille orientée vers l'intérieur, la saillie orientée vers l'extérieur et la douille orientée vers l'extérieur sont inclinées pour glisser de façon à provoquer une libération lorsqu'elles sont soumises à une composante de force dans une direction de rétraction.

8. L'appareil selon l'une quelconque des revendications précédentes, dans lequel chaque panneau a une longueur dans la direction avant-arrière, une hauteur et une épaisseur, et dans lequel la longueur est une valeur inférieure à 2,5 mètres.

9. L'appareil selon l'une quelconque des revendications précédentes, dans lequel chaque panneau comprend un joint (50) configuré pour clore de façon étanche un espace de panneau dans lequel chaque panneau rencontre un panneau voisin.

10. L'appareil selon l'une quelconque des revendications précédentes, dans lequel chaque panneau comprend une cavité intérieure (48) et/ou dans lequel chaque panneau comprend un matériau polymère ayant une densité inférieure à 1500 kg/m³.

11. L'appareil selon l'une quelconque des revendications précédentes, dans lequel chaque panneau est allongé verticalement, et dans lequel l'appareil comprend un rétracteur (31) configuré pour rétracter les panneaux dans la direction avant-arrière.

12. L'appareil selon la revendication 11, dans lequel le rétracteur comprend un système de glissière (31) configuré pour supporter des pivots (40) des panneaux, et un actionneur de glissière (402) configuré pour rétracter les panneaux le long du système de glissière.

13. L'appareil selon la revendication 12, dans lequel les pivots supportés par le système de glissière comprennent des axes.

14. Un conteneur (12) de chargement pour véhicule comprenant l'appareil (14) selon l'une quelconque des revendications précédentes.
